# DEMANDE DE BREVET EUROPEEN

(11) **EP 1 754 943 A1**
(43) Date de publication de la demande: **21.02.2007**
(21) Numéro de dépôt: 06290008.9
(22) Date de dépôt: 04.01.2006
(51) Int. Cl.: F24J 2/26, F28F 1/20, F28F 1/22, F24H 3/02

(54) **Elément éxchangeur de température réalisé par extrusion et ses applications**

(30) Priorité: 29.07.2005 FR 0508163
(62) Demande divisionnaire de: 06023974.6
(71) Demandeur: Calorigen USA Corp, Miami FL 33137-4537 (US)
(72) Inventeur: Boussier, Jean-Jacques, 4830 331 Povoa de Lanhoso (PT)
(74) Mandataire: Célanie, Christian

(57) **Abrégé**

L'invention concerne un élément échangeur de température, réalisé par extrusion, apte à recevoir un élément calorifère et/ou un élément caloporteur et des ailettes de radiation.

Il est constitué d'une base (1) monobloc comportant une face externe (37a) munie de moyens (3) de réception des ailettes de radiation et une face interne (37b) munie d'au moins un moyen (5, 6) d'intégration de l'élément calorifère et/ou de l'élément caloporteur, lesdits moyens de réception et d'intégration étant réalisés lors de l'extrusion de la base.

Application à la réalisation d'un module de rayonnement, d'un séchoir, d'un climatiseur, d'un dispositif de récupération de l'énergie solaire.

## Description

Le secteur technique de la présente invention est celui des dispositifs d'échange thermique et de captation d'énergie rayonnante, et plus particulièrement des dispositifs de chauffage, de refroidissement de volumes, et de captation du rayonnement solaire.

Le chauffage et le maintien à température d'une pièce ou d'un bâtiment est une préoccupation importante pour les architectes et thermiciens qui doivent prévoir et disposer une ou plusieurs sources de chaleur en fonction de la géométrie de la pièce à chauffer. On connaît de nombreux moyens de chauffage d'une pièce : chauffage par le sol, chauffage par air pulsé, chauffage par convecteurs, par rayonnement ou encore chauffage combinant la convection et le rayonnement. Les radiateurs sont actuellement les moyens de chauffage les plus communs. Ils sont classiquement réalisés par moulage en fonte, en acier ou en aluminium. Les éléments de chauffe dans un radiateur sont généralement réalisés par une circulation d'eau chaude dans une conduite ou par une résistance électrique.

Les nouvelles techniques d'extrusion d'un matériau, et principalement de l'aluminium, permettent également de réaliser des radiateurs, pour un coût inférieur au moulage. De plus, l'extrusion permet d'adapter certaines dimensions du radiateur en fonction des caractéristiques de la pièce à chauffer.

Ainsi, le brevet ES-2182617 décrit un radiateur réalisé en aluminium extrudé. Ce radiateur est réalisé par un corps central, un collecteur supérieur et un collecteur inférieur. Le collecteur supérieur et le corps central se présentent sous la forme de tubes comportant des ailettes de diffusion de la chaleur. Des moyens de liaison assurent l'assemblage du corps central et des collecteurs ainsi que la communication entre les tubes des différentes parties du radiateur. Le corps central assure la diffusion de la chaleur par circulation d'eau chaude dans sa partie tubulaire. Une telle réalisation permet avantageusement d'adapter la longueur du corps central et/ou des collecteurs en fonction des caractéristiques de la pièce à chauffer.

Ce radiateur présente cependant plusieurs inconvénients. Un premier inconvénient réside dans le fait que ce radiateur est exclusivement prévu pour utiliser une circulation d'eau chaude comme source calorifère. Il n'est pas envisageable d'utiliser une autre source calorifère. Un autre inconvénient réside dans le fait que les ailettes de diffusion de la chaleur sont solidaires de la partie tubulaire du corps central ou du collecteur supérieur. Il n'est donc pas possible de modifier leur aspect, leur disposition ou leurs dimensions.

On connaît également différents moyens permettant de réduire la température d'une pièce. Mais actuellement, il existe peu de systèmes exerçant les deux fonctions de chauffage et de refroidissement d'une pièce. Ces moyens sont principalement des climatiseurs créant une circulation d'air chaud ou froid. Ces systèmes de climatisation présentent plusieurs inconvénients. Un premier inconvénient réside dans le coût de fabrication et d'installation. Un autre inconvénient réside dans le fait qu'une circulation d'air engendre souvent des problèmes médicaux pour les utilisateurs (développement de germes dans le système, "coup de froid",...). Un autre inconvénient réside dans le faible rendement de ces systèmes consommant beaucoup d'énergie.

Le but de la présente invention est de fournir un élément échangeur de température ayant une grande surface d'échange, dissipant l'énergie sous forme de rayonnement en basse température et permettant d'apporter une solution technique aux inconvénients mentionnés ci-dessus.

L'invention a donc pour objet un élément échangeur de température, réalisé par extrusion, apte à recevoir un élément calorifère et/ou un élément caloporteur et des ailettes de radiation, caractérisé en ce qu'il est constitué d'une base monobloc comportant sur sa face externe des moyens de réception des ailettes de radiation et sur sa face interne au moins un moyen d'intégration de l'élément calorifère et/ou de l'élément caloporteur, lesdits moyens de réception et d'intégration étant réalisés lors de l'extrusion de la base.

Selon une caractéristique de l'invention, l'élément échangeur de température est réalisé en aluminium extrudé.

Selon une autre caractéristique de l'invention, les ailettes présentent au niveau d'un bord un profil complémentaire aux moyens de réception et sont solidarisées à la base par insertion des profils complémentaires dans les moyens de réception des ailettes.

Selon encore une autre caractéristique de l'invention, les ailettes présentent un profil sensiblement en arc de cercle.

Selon une autre caractéristique de l'invention, les ailettes sont disposées concaves sur une partie de la base et convexes sur l'autre partie de la base.

Selon une autre caractéristique de l'invention, l'élément échangeur de température comporte un élément central constitué de deux ailettes de courbure opposées solidaires l'une de l'autre.

Selon une autre caractéristique de l'invention, chaque base comporte à ses deux extrémités latérales des moyens d'accrochage permettant la disposition côte à côte et la solidarisation entre elles de plusieurs bases.

Selon une autre caractéristique de l'invention, l'élément échangeur de température comporte un élément calorifère électrique se présentant sous la forme d'un matériau composite souple, sensiblement plat et apte à épouser la face interne de la base.

Selon une autre caractéristique de l'invention, l'élément calorifère est collé sur la face interne de la base et est alimenté par une source électrique.

Selon une autre caractéristique de l'invention, le moyen caloporteur est un élément réfrigérant se présentant sous la forme d'au moins un tube dans lequel circule un fluide caloporteur.

L'invention concerne également un procédé de réalisation d'un élément échangeur de température, caractérisé en ce qu'on extrude un premier profilé afin de réaliser la base apte à recevoir des ailettes de radiation et/ou l'élément caloporteur, et comportant les moyens de réception des ailettes de radiation se présentant sous la forme de glissières, en ce qu'on découpe le profilé selon la longueur désirée, en ce qu'on extrude au moins un second profilé afin de réaliser des ailettes de radiation dont un des bords est de section complémentaire aux glissières de la base, en ce qu'on découpe les ailettes selon les dimensions de la base et en ce qu'on insère les ailettes dans les glissières de la base.

L'invention concerne également un dispositif de régulation de la température, caractérisé en ce qu'il comporte un élément échangeur de température, un capteur de température et un support supportant l'élément échangeur de température.

L'invention concerne également un module de radiation, caractérisé en ce qu'il comporte un support et un élément échangeur de température.

L'invention concerne également un module de radiation, caractérisé en ce qu'il comporte un support et un élément monobloc échangeur de température comportant des ailettes de radiations réalisés par extrusion pour former une pièce unique, ledit élément échangeur de température comportant des moyens d'intégration d'un élément calorifère et/ou caloporteur.

Selon une caractéristique de l'invention, les moyens d'intégration d'un élément calorifère se présentent sous la forme de rails entre lesquels peut être inséré un élément calorifère.

Selon une autre caractéristique de l'invention, l'élément calorifère est un tissu chauffant électrique, une brique chauffante ou une résistance autorégulante

Selon encore une autre caractéristique de l'invention, les ailettes présentent un profil ondulé afin d'augmenter la surface d'échange de chaleur.

Selon une autre caractéristique de l'invention, le module de radiation comporte un diffuseur.

L'invention concerne également un dispositif de régulation de la température d'une pièce ou d'un véhicule, caractérisé en ce qu'il comporte un capteur de température, un moyen de régulation de la température et au moins un module de radiation, et en ce qu'il se présente sous une forme allongée et de faible largeur, afin d'être utilisé comme plinthe, comme profilé d'échange de température pour plafond, comme montant d'ouvrant ou comme colonne de radiation à 360°.

L'invention concerne également un dispositif de régulation de la température d'une pièce ou d'un véhicule, caractérisé en ce qu'il comporte un capteur de température, un moyen de régulation de la température et au moins quatre modules de radiation disposés verticalement en cercle afin de réaliser une colonne de radiation à 360°.

L'invention concerne également un séchoir pour serviette, linge ou matériau textiles, caractérisé en ce qu'il comporte un moyen de régulation de la température et plusieurs modules de radiation, solidarisés les uns aux autres et au moins un carénage prolongeant le diffuseur.

L'invention concerne également un climatiseur pour habitation, pour véhicule ou pour aéronef, caractérisé en ce qu'il comporte un dispositif de régulation de la température ou un module de radiation, une pompe permettant la circulation du fluide réfrigérant et un circuit de refroidissement permettant le refroidissement du fluide réfrigérant.

L'invention concerne également un climatiseur pour habitation pour véhicule ou pour aéronef, caractérisé en ce qu'il comporte au moins un module de radiation, une pompe permettant la circulation du fluide réfrigérant et un circuit de refroidissement permettant le refroidissement du fluide réfrigérant.

L'invention concerne également un dispositif de récupération de l'énergie solaire, caractérisé en ce qu'il comporte un support supportant au moins un élément échangeur de température, et une paroi de captation de la chaleur.

Enfin, l'invention concerne également un procédé de réalisation d'un module de radiation, caractérisé en ce qu'on extrude un profilé constituant élément monobloc échangeur de température comportant des ailettes de radiations et des moyens d'intégration d'un élément calorifère, en ce qu'on découpe le profilé selon la longueur désirée afin de réaliser un élément monobloc échangeur de température en en ce qu'on solidarise l'élément monobloc d'un support.

Un tout premier avantage du dispositif selon l'invention réside dans sa modularité.

Un autre avantage réside dans le faible coût d'obtention.

Un autre avantage réside dans la possibilité de réaliser pour un faible coût un dispositif de dimension, de forme et d'aspect spécifiques.

Un autre avantage réside dans la simplicité et la rapidité de montage du dispositif.

Un autre avantage réside dans le rendement performant de l'élément échangeur de température et des dispositifs le mettant en oeuvre.

Un autre avantage réside dans le fait qu'on peut modifier la surface de rayonnement du dispositif de chauffage en remplaçant une ou plusieurs ailettes.

Un autre avantage réside dans le fait que l'élément échangeur de température offre une très grand surface d'échange.

Un autre avantage d'un mode spécifique de réalisation de l'invention réside dans le fait que l'élément échangeur de température réalisé en aluminium extrudé présente une très bonne conductibilité thermique.

Un autre avantage réside dans le fait que l'invention permet d'éliminer la diffusion de chaleur par stratification d'air chaud au plafond, ce qui participe à réduire la consommation d'énergie.

D'autres caractéristiques, détails et avantages de l'invention ressortiront plus clairement de la description donnée ci-après à titre indicatif en relation avec des dessins dans lesquels :
- la figure 1 représente en vue de dessus un exemple de réalisation d'un élément échangeur de température selon l'invention,
- la figure 2 illustre un exemple de réalisation d'un dispositif de régulation de la température selon l'invention,
- la figure 3 illustre en vue éclatée un exemple de réalisation d'un module de radiation,
- la figure 4 illustre un exemple de réalisation d'un séchoir,
- la figure 5 illustre schématiquement un exemple d'intégration d'un climatiseur dans une habitation,
- la figure 6 illustre un exemple de réalisation d'un dispositif de récupération de l'énergie solaire,
- la figure 7 illustre une autre application de l'invention,
- la figure 8 illustre une variante de réalisation d'un élément échangeur de température,
- la figure 9 illustre une autre variante de réalisation d'un élément échangeur de température, et
- la figure 10 illustre la réalisation d'un élément échangeur de température sous forme de colonne

Le principe de fonctionnement mis en oeuvre dans l'élément échangeur de température selon l'invention est celui de l'utilisation d'un ΔT (différence de températures) réduit entre la source de production et la source d'utilisation de température, ce qui induit une augmentation significative de rendement, et par voie de conséquence une diminution importante de la consommation d'énergie. L'élément échangeur de température peut aussi bien être utilisé en mode radiateur pour chauffer une pièce qu'en mode évaporateur pour diminuer la température d'une pièce.

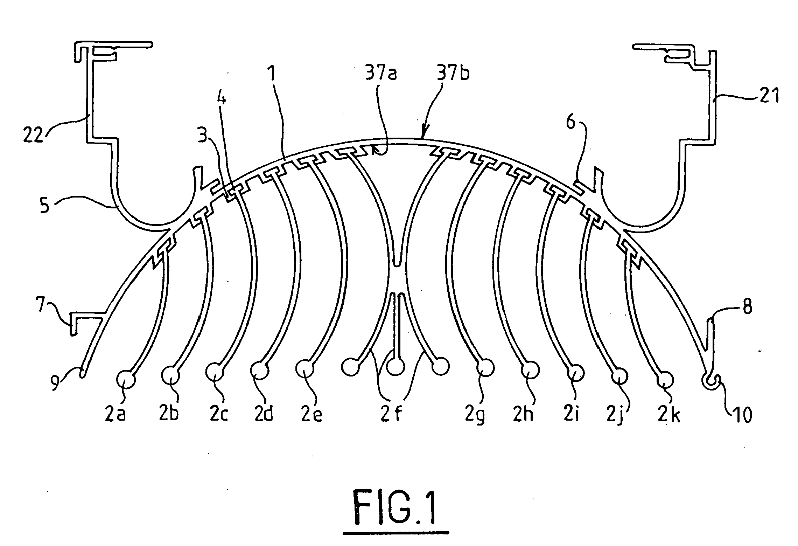

La figure 1 représente en vue de dessus un exemple de réalisation d'un élément échangeur de température 20 selon l'invention.

Dans cet exemple de réalisation, l'élément échangeur de température 20 comporte une base 1 monobloc extrudée sur laquelle sont fixées des ailettes 2a à 2k d'échange de chaleur réalisées par extrusion.

La base 1 monobloc présente une face externe 37a munie de glissières 3 constituant des moyens de réception des ailettes de radiation et une face interne 37b munie d'un moyen 6 d'intégration d'un élément calorifère et d'un moyen 5 d'intégration d'un élément caloporteur. Les glissières 3 et les moyens d'intégration 5, 6 sont intégrés à la base 1 et sont réalisés lors de l'extrusion de celle-ci. Le moyen 5 d'intégration de l'élément caloporteur présente un profil sensiblement semi-circulaire apte à recevoir un élément de chauffe sensiblement tubulaire. Le moyen d'intégration de l'élément calorifère est ici réalisé par des languettes 6 aptes à maintenir un élément de chauffe souple et sensiblement plat (par exemple un tissu chauffant).

Chaque ailette 2a à 2k est indépendante des autres ailettes et présente au niveau d'un bord un profil 4 complémentaire à celui des glissières 3 afin d'être rendue solidaire de la base 1 par coulissement de son bord 4 dans une glissière 3 de la base 1. Les ailettes 2a à 2k ont un profil sensiblement en arc de cercle. Dans cet exemple de réalisation, on a représenté des ailettes 2a à 2e disposées concaves sur une partie de la base 1 et 2g à 2k disposées convexes sur l'autre partie de la base 1. Un élément central 2f est constitué de deux ailettes de courbure opposée et solidaires l'une de l'autre au niveau d'une partie de leur surface de contact.

La base 1 est munie d'un côté (à gauche sur la figure) d'une excroissance 9 et d'un crochet 7 et de l'autre côté (à droite sur la figure) d'un crochet 10 et d'une languette 8. Ces éléments permettant l'accrochage de plusieurs éléments échangeurs de température entre eux, ou bien la fixation à un support non représenté ici. La base 1 est encore munie de deux pattes 21 et 22 permettant également sa fixation dans le support.

L'échangeur tel que décrit permet l'utilisation d'un ΔT faible entre la source de production et la source d'utilisation de température, ce qui n'est pas le cas des réalisations connues.

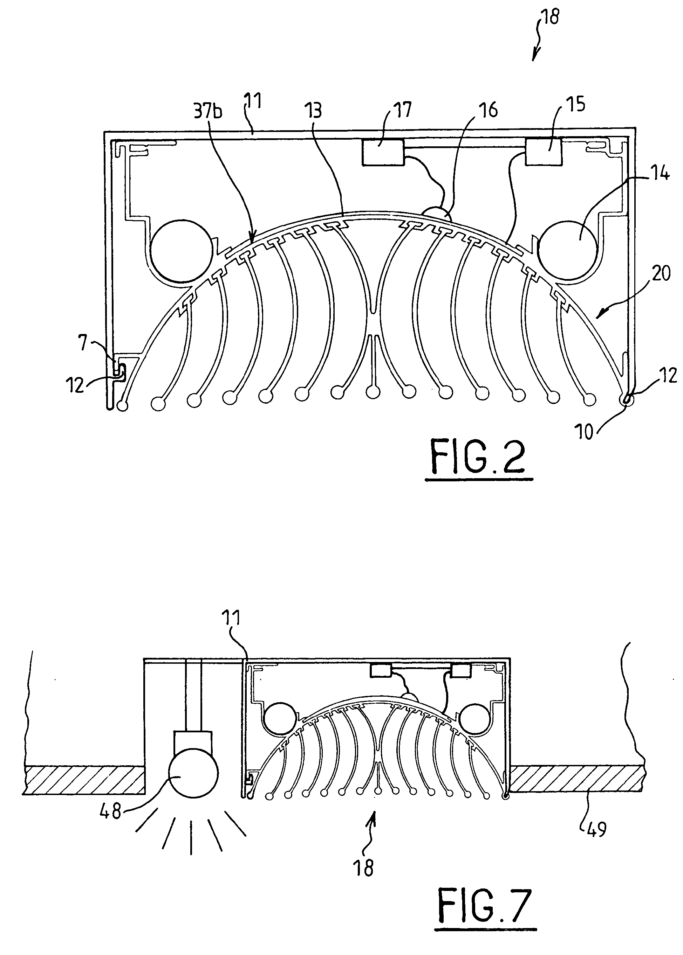

La figure 2 illustre un exemple de réalisation d'un dispositif de régulation de la température 18 selon l'invention. Le dispositif de régulation de la température 18 comporte un élément échangeur de température 20 tel que décrit précédemment en relation avec la figure 1, un élément calorifère 13 électrique, un élément caloporteur 14, un capteur de température 16, un calculateur 17 et un support 11 supportant l'élément échangeur de température.

Le support 11 comporte des moyens d'accrochage 12 coopérant avec les moyens d'accrochage 7 et 10 de l'élément échangeur de température 20. Les pattes 21 et 22 de la base viennent en appui sur le fond de la paroi latérale du support 11.

L'élément calorifère 13 se présente sous la forme d'un matériau composite souple, sensiblement plat et épousant la face interne 37b de la base 1 de l'élément échangeur de température 20. L'élément calorifère est par exemple un tissu chauffant alimenté par une source électrique 15 et collé sur la face interne 37b de la base 1. Le capteur de température 16 est directement fixé sur l'élément chauffant 13, ou sur la base 1 afin de contrôler en permanence la température diffusée. Le capteur de température 16 et la source électrique 15 sont reliés au calculateur 17 qui régule l'énergie fournie au tissu chauffant en fonction de l'écart entre la température mesurée et la température souhaitée.

Le moyen caloporteur 14 est un élément réfrigérant se présentant sous la forme de deux tubes 14 dans lesquels circule un fluide réfrigérant.

Une telle réalisation permet avantageusement d'obtenir un dispositif de régulation de la température pouvant aussi bien réaliser une fonction de radiateur en mettant en oeuvre l'élément chauffant 13, que de climatiseur en mettant en oeuvre l'élément réfrigérant 14.

Avantageusement, l'utilisation de matériau composite souple chauffant à faible niveau de puissance, collé en partie arrière de l'élément échangeur de température permet, grâce à la grande surface d'échange des ailettes de limiter la température de la source de production de chaleur à un niveau très réduit. Ainsi, l'invention permet le chauffage d'une pièce par dissipation d'énergie rayonnante à un ΔT d'environ 8°C. La réduction du ΔT augmente le rendement et réduit la consommation d'énergie.

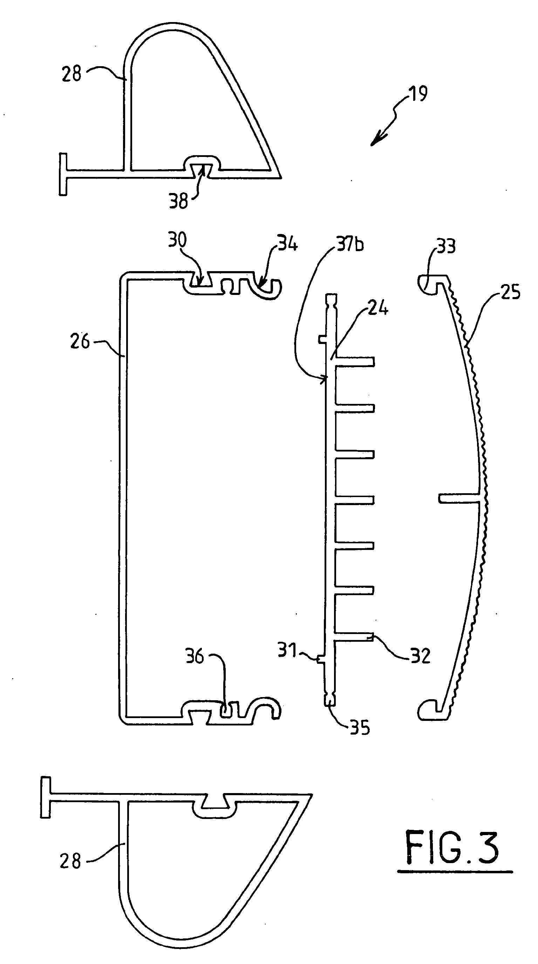

La figure 3 illustre en vue éclatée un exemple de réalisation d'un module de radiation. Dans cet exemple de réalisation, le module de radiation 19 comporte un support 26, un diffuseur 25 et un élément échangeur de température 24 disposé entre le support 26 et un diffuseur 25. Des carénages 28 sont prévus pour être fixés de part et d'autre du module de radiation 19. Le support 26 comporte des rainures 36 de profil complémentaire aux extrémités 35 de l'élément échangeur de température 24 afin que ce dernier puisse être rendu solidaire du support 26 par coulissement de ses extrémités 35 dans les rainures 36. Le diffuseur 25 comporte à ses extrémités des ergots 33. Le support 26 comporte également des gouttières 34, de profils complémentaires à ceux des ergots 33 du diffuseur 25 afin que ce dernier puisse être rendu solidaire du support par coulissement de ses ergots 33 dans les gouttières 34. Enfin, le support 26 et les carénages 28 comportent respectivement des profils 30 et 38 en queue d'aronde afin d'être solidarisés entre eux.

L'élément échangeur de température 24 comporte sur sa face interne 37b (face opposée à celle supportant les ailettes) des rails 31 entre lesquels peut être disposé un élément calorifère.

L'élément échangeur de température 24 est représenté formant une pièce unique et comportant des ailettes 32 droites, mais on pourra très bien mettre en oeuvre un élément échangeur de température tel que décrit en relation avec la figure 1 sans changer la portée de l'invention. De même, on pourra équiper le module de radiation d'un élément caloporteur tel que décrit précédemment, en relation avec la figure 2.

Le module ainsi réalisé peut se présenter selon différentes dimensions. Dans un mode spécifique de réalisation, le module de radiation se présente sous une forme allongée et de faible largeur, afin d'être utilisé comme plinthe, comme montant d'ouvrant ou comme profil de plafond. On entend par "faible largeur" une distance entre le diffuseur 25 et le fond du support 26 de l'ordre de quelques centimètres. Dans un autre mode de réalisation, le module de radiation aura une largeur allant de quelques centimètres à plusieurs décimètres et aura une longueur comprise entre 10 centimètres et plusieurs mètres.

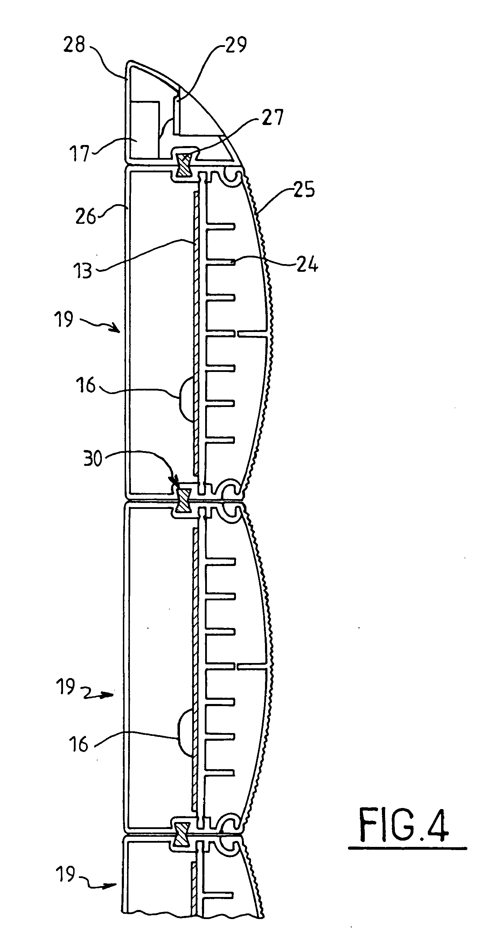

La figure 4 illustre un exemple de réalisation d'un sèche serviettes, linge ou matériau textiles incorporant un échangeur de température selon l'invention. Le sèche serviettes est réalisé au moyen de plusieurs modules de radiation 19 solidaires les uns des autres et d'un carénage 28 (dont seuls deux modules sont représentés). Dans cet exemple de réalisation, les modules 19 de radiation et le carénage 28 sont solidarisés au moyen de profilés 27 en double queue d'aronde coopérant avec des profils complémentaires du support 26 des modules 19 et du carénage 28. Le carénage 28 est de forme adéquate à prolonger le diffuseur 25.

Chaque module 19 de radiation comporte un élément calorifère 13 électrique se présentant sous la forme d'un matériau composite souple, sensiblement plat et épousant la face interne 37b de l'élément échangeur de température 24, et un capteur de température 16. Un calculateur 17 est relié électriquement aux différents capteurs de température 16, aux alimentations électriques des éléments calorifères 13 et à une interface utilisateur 29. L'interface utilisateur permet à l'utilisateur de déterminer les paramètres de fonctionnement du séchoir et de visualiser des données de fonctionnement telles que la température du séchoir ou la puissance de séchage. Le calculateur remplit la fonction de moyen de régulation de la température en régulant la puissance électrique diffusée par l'élément calorifère en fonction du ΔT mesuré entre la consigne enregistrée et la température mesurée. Dans cet exemple de réalisation, le calculateur 17 et l'interface utilisateur 29 sont avantageusement disposés dans le carénage 28. On pourra évidemment réaliser l'invention en disposant ces éléments en dehors du séchoir, par exemple sur un mur ou sur un tableau de commande domotique.

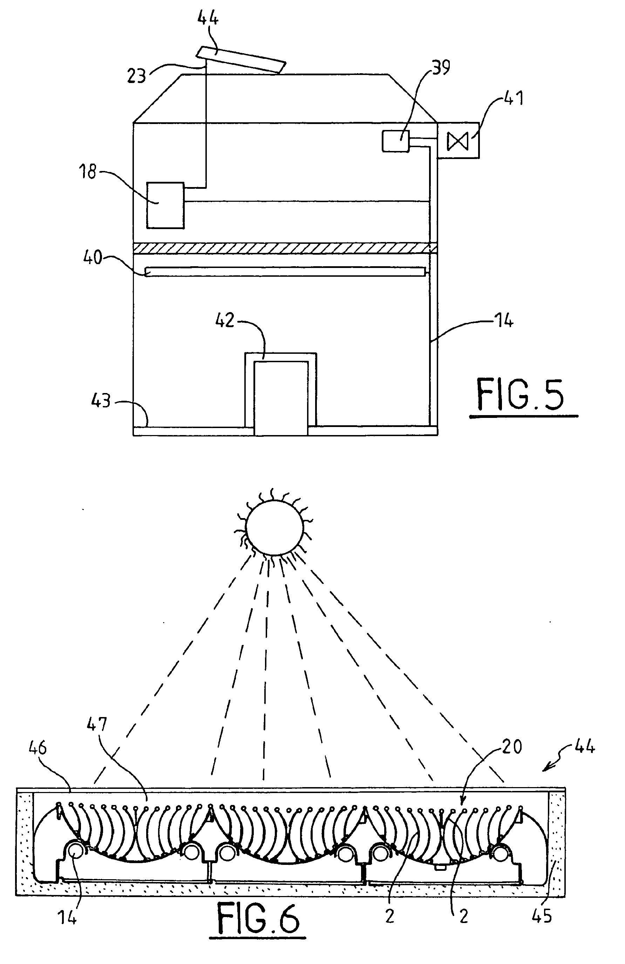

La figure 5 illustre schématiquement un exemple d'utilisation de différentes réalisations d'un échangeur de température selon l'invention dans une habitation. Les échangeurs de température selon l'invention sont ici en relation avec un circuit de refroidissement. Dans cet exemple, l'habitation est équipée d'un dispositif 18 de régulation de la température tel que décrit précédemment en relation avec la figure 2, et de modules 40, 42 et 43 de radiation tels que décrits précédemment en relation avec la figure 3. Dans cet exemple, le dispositif 18 de régulation de la température et les modules 40, 42 et 43 de radiation comportent un moyen caloporteur réalisé par une conduite 14 de circulation d'eau. L'eau exerce ici une fonction de fluide réfrigérant. La conduite 14 de circulation d'eau est reliée à une pompe 39 et à un condenseur 41. La pompe 39 permet la circulation d'eau dans la conduite 14 et le condenseur 41, disposé à l'extérieur de l'habitation, permet de refroidir l'eau par échange thermique avec l'air extérieur. La pompe 39, le condenseur 41 et la conduite 14 de circulation d'eau constituent ainsi un circuit de refroidissement permettant le refroidissement du fluide réfrigérant.

Les modules 40, 42 et 43 de radiation mis en oeuvre dans cet exemple sont des plinthes 40 et 43 et des montants 42 d'ouvrant (l'ouvrant représenté étant une porte).

On a aussi disposé un dispositif de récupération de l'énergie solaire 44 (dont le fonctionnement sera décrit par la suite) permettant d'approvisionner le dispositif 18 de régulation de la température en eau chaude au moyen d'une conduite 23.

Les échangeurs de température mis en oeuvre dans cet exemple d'utilisation sont donnés à titre illustratif et non exhaustif. On pourra bien entendu équiper de la même manière un volume ou une habitation avec les différents éléments selon l'invention. Ces éléments pourront être installés de sorte à être complémentaires dans leur fonction.

Dans une variante d'intégration (non représentée), on pourra intégrer un climatiseur selon l'invention dans un véhicule du type aéronef. Lors du vol en haute altitude, la température extérieure est suffisamment basse pour permettre un échange thermique favorable à la climatisation de l'aéronef en disposant un profilé échangeur de température dan un évidemment adapté à la structure de l'aéronef. La conduite 14 dans laquelle circule un fluide caloporteur associée à ce dispositif réalise alors le circuit de refroidissement. Le fluide ainsi refroidi est ensuite dirigé (par exemple au moyen d'une pompe) vers un échangeur de température fonctionnant en mode évaporateur, pour capter la chaleur de la cabine.

La figure 6 illustre un exemple de réalisation d'un dispositif de récupération de l'énergie solaire, comportant des éléments échangeurs de température 20 selon l'invention.

Dans cet exemple de réalisation, le dispositif 44 de récupération de l'énergie solaire comporte un support 45, des éléments échangeurs de température 20 selon l'invention, une paroi 46 de captation de la chaleur et un moyen caloporteur se présentant sous la forme d'un ou plusieurs tubes 14 dans lesquels circule un fluide caloporteur. Le support 45 et la paroi 46 de captation de la chaleur constituent une enceinte 47 dans laquelle sont disposés un ou plusieurs éléments échangeurs de température. Pour un meilleur rendement, on utilisera préférentiellement des éléments échangeurs de température 20 anodisés noir mat.

Le fonctionnement de ce dispositif est le suivant : les rayons infrarouges réchauffent les ailettes des éléments échangeurs de température 20, la chaleur des ailettes se propage dans l'ensemble de l'échangeur jusqu'au moyen caloporteur et réchauffe l'eau circulant dans les tubes 14. Une pompe (non représentée) assure la circulation d'eau. Avantageusement, l'utilisation d'ailettes courbes permet d'améliorer le rendement du dispositif. En effet, bien que le rayonnement infrarouge soit en grande partie absorbé par les ailettes, il subsiste toujours un réfléchissement du rayonnement. La courbure des ailettes permet de diriger les rayons réfléchis vers la base 1 de l'élément échangeur de température afin qu'ils soient finalement absorbés soit par la base soit par une ailette voisine.

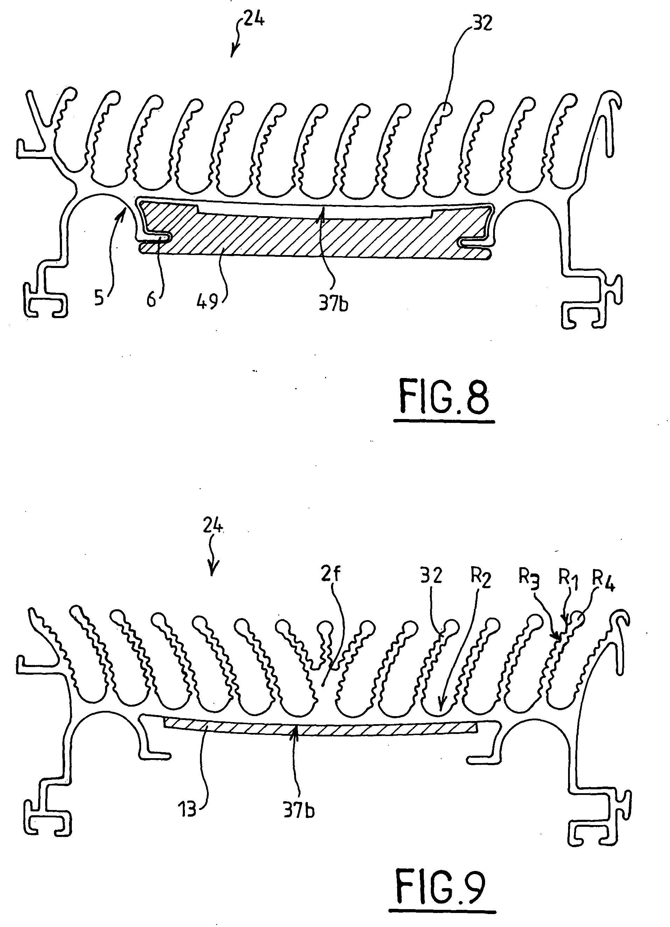

La figure 7 illustre une autre application de l'invention. Dans ce mode spécifique d'utilisation, on a réalisé un dispositif de régulation de la température 18 tel que décrit précédemment en relation avec la figure 2 apte à être monté dans un faux plafond 49 et à constituer ainsi un profilé d'échange de température pour plafond. Ce dispositif a donc une longueur correspondant à la longueur standard d'un éclairage au néon (classiquement de 600mm à 1800mm), une hauteur de l'ordre de 100mm à 300mm et une largeur de l'ordre de 100mm à 500mm. Le dispositif de régulation de la température peut ainsi être disposé dans le faux plafond 49, par exemple à côté de l'éclairage 48. Dans un mode spécifique de réalisation, le support 11 comportera des moyens de réception aptes à recevoir des éléments d'éclairage 48.

La figure 8 illustre une variante de réalisation d'un élément échangeur de température.

Dans cet exemple de réalisation, l'élément échangeur de température 24 est monobloc et comporte sur sa face externe des ailettes de radiation 32. L'élément échangeur de température 24 comporte également sur sa face interne 37b (face opposée à celle supportant les ailettes) un moyen 6 d'intégration d'un élément calorifère et un moyen 5 d'intégration d'un élément caloporteur. Le moyen 6 d'intégration d'un élément calorifère se présente sous la forme de rails 6 entre lesquels peut être inséré un élément calorifère du type tissu chauffant ou brique chauffante 49. Une telle brique chauffante est généralement réalisée par un élément réfractaire (par exemple en terre cuite) dans lequel est insérée une résistance électrique. Cependant, on réalisera préférentiellement une telle brique sous la forme d'un pavé en aluminium extrudé sur lequel on vient déposer un tissu chauffant adhésif fonctionnant en basse température.

Ainsi, contrairement aux briques réfractaires dont la résistance électrique atteint des températures de l'ordre de 600 °C, un élément calorifère du type brique chauffante en aluminium extrudé constitue avantageusement un bloc chauffant par effet Joule en basse température (c'est-à-dire dont la température de fonctionnement est inférieure à 130 °C). Une telle réalisation présente avantageusement une inertie thermique liée à la masse du bloc en aluminium induisant une accumulation de chaleur en basse température qui se dissipe lentement par radiation et conduction dans la structure métallique de l'échangeur, provoquant un effet de lissage thermique en évitant les brusques variations de température.

On pourra également fixer directement sur la face interne 37b un élément calorifère du type tissu chauffant adhésif fonctionnant en basse température.

Les dimensions du tissu chauffant et sa puissance sont calculées en fonction des caractéristiques intrinsèques du profil échangeur et en fonction de la différence de température entre la pièce à chauffer est le profil échangeur.

Avantageusement, les ailettes de radiation 32 se présentent sous la forme d'un arc de cercle dont le profil ondulé sur une face permet d'augmenter la surface d'échange de l'échangeur, l'autre face visible est volontairement dispensée d'ondulation pour éviter l'accumulation de poussières.

Un tel profil est préférentiellement destiné à une installation en positionnement horizontale, par exemple pour la fabrication de radiateurs muraux de colonne de radiation à 360° ou de plinthes chauffantes.

L'échangeur ainsi réalisé constitue un échangeur hybride qui permet le fonctionnement et l'utilisation d'énergies et de concepts générateurs de chaud ou de froid en provenance de plusieurs sources, fonctionnant ensemble ou séparément. A titre d'exemple, la partie collecteur pourra être alimentée par l'énergie d'un fluide caloporteur en provenance de capteur solaire pendant la journée et, en cas de baisse d'énergie solaire, basculer automatiquement sur l'énergie calorifique produite par les tissus chauffants, ou celle d'une pompe à chaleur, le cycle inverse étant lui aussi possible.

La figure 9 illustre une variante de réalisation d'un élément échangeur de température comportant un élément central 2f constitué de deux ailettes de courbures opposées et solidaires l'une de l'autre au niveau d'une partie de leur surface de contact. Les ailettes, ainsi que l'élément central, présentent un profil ondulé afin d'augmenter la surface d'échange de chaleur. Un élément calorifère électrique 13 se présentant sous la forme d'un matériau composite souple est collé sur la face interne 37b de l'élément échangeur de température.

Dans cet exemple de réalisation, les ailettes 32 présentent une ondulation sur chacune de leurs faces. L'ondulation des ailettes 32 est réalisée par une succession de courbes concaves de rayon R3 et convexe de rayon R1. L'extrémité des ailettes présente un profil circulaire de rayon R4. L'élément échangeur présente également un profil semi-circulaire de rayon R2 entre chaque ailette.

L'ondulation des ailettes apporte une augmentation de surface d'échange supérieure de plus de 40% par rapport à un profil ne comportant pas d'ondulation. Ainsi, en fonction de l'effet recherché, les ailettes pourront présenter un profil ondulé sur une ou deux faces, ce profil pouvant être étendu sur toute la longueur de l'ailette ou uniquement sur une portion d'ailette, comme représenté sur la figure 8 à la base des ailettes.

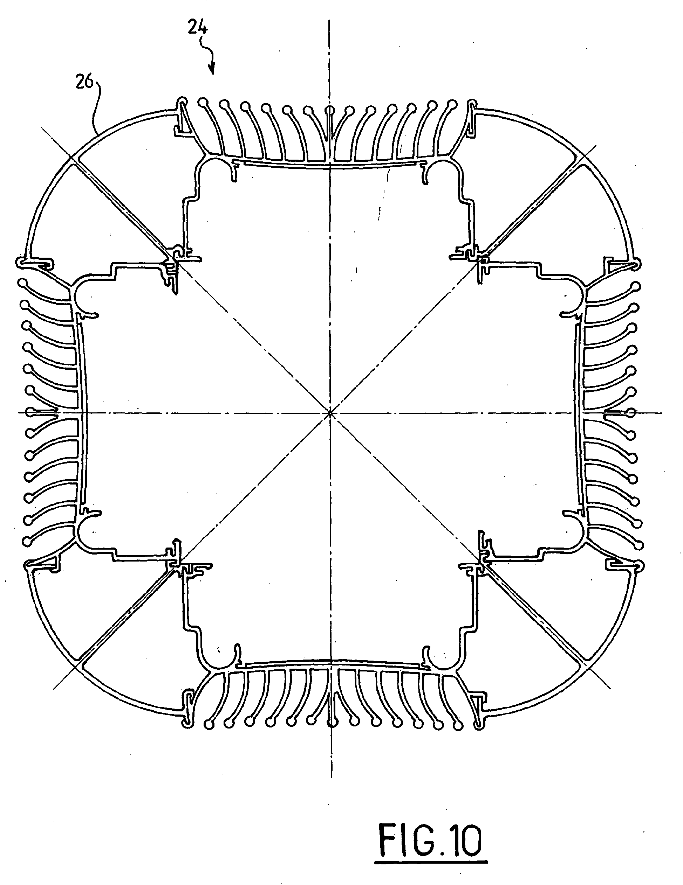

La figure 10 illustre la réalisation d'un élément échangeur de température se présentant sous forme de colonne. L'élément échangeur de température est constitué de modules de radiation comportant un support et un élément échangeur de température, par exemple tel que décrit en relation avec la figure 9, disposés verticalement et en cercle afin de réaliser une colonne de radiation à 360° ayant une fonction de radiateur vertical avec une dissipation d'énergie à 360°. La colonne est réalisée en assemblant quatre éléments échangeur de température 24 avec quatre supports angulaires 26 sensiblement en arc de cercle. On pourra également réaliser une colonne comportant un nombre supérieur de modules, par exemple six ou huit modules verticaux, les supports angulaires seront alors respectivement des sixièmes ou des huitièmes de cercle.

Ce principe de montage des éléments échangeur permet de positionner sur une surface réduite une puissance de chauffage importante, avec une surface d'échange optimum, le résultat obtenu étant une distribution de chaleur en basse température, par rayonnement avec très peu de convection, et une répartition uniforme de la chaleur sur 360°.

D'une manière générale, et pour l'ensemble des dispositifs et éléments de l'invention, l'utilisation d'ailettes de formes différentes permet d'une part d'obtenir des effets esthétiques différents et d'autre part des effets techniques différents. Ainsi, l'utilisation d'ailettes courbes ou ondulées permet d'obtenir une plus grande surface d'échange thermique, donc une meilleure efficacité du dispositif de chauffage. Toute autre forme d'ailette peut bien entendu être prévue.

Une telle réalisation ne peut être obtenue que par extrusion. En effet, seule l'extrusion permet d'obtenir avec une grande précision des formes complémentaires. Une telle précision permet ainsi un assemblage précis de la base et des ailettes et garantit une bonne continuité thermique entre ces pièces. On réalisera préférentiellement les éléments constitutifs de l'invention en aluminium ou en un de ses alliages. En effet, l'aluminium présente des caractéristiques thermiques particulièrement adaptées à la réalisation d'échangeurs de température et présente des caractéristiques mécaniques propices à l'extrusion.

Avantageusement, l'utilisation de matériau composite souple chauffant à faible niveau de puissance, collé en partie arrière de l'élément échangeur de température permet, grâce à la grande surface d'échange des ailettes, de limiter la température de la source de production de chaleur à un niveau très réduit. Ainsi, l'invention permet le chauffage d'une pièce par dissipation d'énergie rayonnante à un ΔT d'environ 8°C. La réduction du ΔT augmente le rendement et réduit la consommation d'énergie.

Un autre avantage réside dans le fait que l'élément échangeur de température est réalisé en aluminium extrudé, ce qui permet l'utilisation de très faibles épaisseurs de métal, induisant par conduction un transfert immédiat de chaleur et éliminant toute inertie thermique. Ce qui a pour conséquence une élimination quasi-totale du rayonnement infrarouge en partie arrière du radiateur.

Un autre avantage de l'invention réside dans le fait que l'utilisation avec un faible Delta T induit une dilatation négligeable et donc une absence des bruits et contraintes liés aux dilatations des différents éléments.

Un autre avantage encore réside dans le fait que l'élément échangeur de température permet un rayonnement aussi bien vertical qu'horizontal de 180°, ce qui apporte une répartition uniforme de la chaleur rayonnante.

Avantageusement, ce dispositif ne nécessite aucune pièce de fixation des différents éléments, ni aucun soudage, ce qui permet un montage simple, rapide et à faible coût. De plus, un tel dispositif présente l'avantage de pouvoir être commercialisé "en kit" et d'être ensuite monté par l'utilisateur. La commercialisation "en kit" présente l'avantage du faible encombrement du radiateur, ce qui réduit les coûts de stockage et de transport.

Avantageusement, ce dispositif constitue un radiateur hybride, permettant l'utilisation d'une source électrique, d'une source thermique (ou frigorifique) ou l'utilisation simultanée de plusieurs sources d'énergie.

On pourra également réaliser des modules de radiation ou des profilés pour plafond selon un mode spécifique de réalisation de l'invention de grande longueur, emboîtables et raccordables entre eux.

Un avantage de l'utilisation de l'aluminium extrudé réside dans les excellentes caractéristiques de conduction thermique de l'aluminium. Ces caractéristiques permettent l'utilisation d'éléments calorifères fonctionnant en basse température. On pourra ainsi utiliser comme élément calorifère des résistances autorégulantes (connues sous le nom de résistances PTC). Une telle association permet à l'invention de présenter un rendement performant.

## Revendications

1. Elément échangeur de température, réalisé par extrusion, apte à recevoir un élément calorifère et/ou un élément caloporteur et des ailettes de radiation, **caractérisé en ce qu'**il est constitué d'une base (1) monobloc comportant sur sa face externe (37a) des moyens (3) de réception des ailettes de radiation et sur sa face interne (37b) au moins un moyen (5, 6) d'intégration de l'élément calorifère et/ou de l'élément caloporteur, lesdits moyens de réception et d'intégration étant réalisés lors de l'extrusion de la base.

2. Elément échangeur de température selon la revendication 1, **caractérisé en ce qu'**il est réalisé en aluminium extrudé.

3. Elément échangeur de température selon la revendication 1 ou 2, **caractérisé en ce que** les ailettes (2a à 2k) présentent au niveau d'un bord un profil complémentaire (4) à celui des moyens (3) de réception et sont solidarisées à la base (1) par insertion des profils complémentaires (4) dans les moyens (3) de réception des ailettes.

4. Elément échangeur de température selon l'une des revendications 1 à 3, **caractérisé en ce que** les ailettes (2a à 2k) ont un profil sensiblement en arc de cercle.

5. Elément échangeur de température selon la revendication 4, **caractérisé en ce que** les ailettes (2a à 2e) sont disposées concaves sur une partie de la base (1) et (2g à 2k) disposées convexes sur l'autre partie de la base (1).

6. Elément échangeur de température selon la revendication 5, **caractérisé en ce qu'**il comporte un élément central (2f) constitué de deux ailettes de courbure opposées solidaires l'une de l'autre.

7. Elément échangeur de température selon l'une des revendications 1 à 6, **caractérisé en ce que** chaque base (1) comporte à ses deux extrémités latérales des moyens d'accrochage permettant la disposition côte à côte et la solidarisation entre elles de plusieurs bases.

8. Elément échangeur de température selon l'une des revendications 1 à 7, **caractérisé en ce qu'**il comporte un élément calorifère électrique (13) se présentant sous la forme d'un matériau composite souple, sensiblement plat et apte à épouser la face interne (37b) de la base (1).

9. Elément échangeur de température selon la revendication 8, **caractérisé en ce que** l'élément calorifère (13) est collé sur la face interne (37b) de la base (1) et est alimenté par une source électrique (15).

10. Elément échangeur de température selon l'une des revendications 1 à 9, **caractérisé en ce que** le moyen caloporteur est un élément réfrigérant se présentant sous la forme d'au moins un tube (14) dans lequel circule un fluide caloporteur.

11. Procédé de réalisation d'un élément échangeur de température selon l'une des revendications 1 à 10,
**caractérisé en ce qu'**on extrude un premier profilé afin de réaliser la base (1) apte à recevoir des ailettes de radiation et/ou l'élément caloporteur, et comportant les moyens de réception des ailettes de radiation se présentant sous la forme de glissières (3), **en ce qu'**on découpe le profilé selon la longueur désirée, **en ce qu'**on extrude au moins un second profilé afin de réaliser des ailettes (2) de radiation dont un des bords (4) est de section complémentaire aux glissières (3) de la base (1), **en ce qu'**on découpe les ailettes (2) selon les dimensions de la base (1) et **en ce qu'**on insère les ailettes dans les glissières (3) de la base (1).

12. Dispositif de régulation de la température, **caractérisé en ce qu'**il comporte un élément échangeur de température (20) selon l'une des revendications 1 à 10, un capteur de température (16) et un support (26) supportant l'élément échangeur de température.

13. Module de radiation, **caractérisé en ce qu'**il comporte un support (26) et un élément (24) échangeur de température (20) selon l'une des revendications 1 à 10.

14. Module de radiation, **caractérisé en ce qu'**il comporte un support (26) et un élément monobloc (24) échangeur de température comportant des ailettes de radiations réalisés par extrusion pour former une pièce unique, ledit élément échangeur de température comportant des moyens (5, 6, 37b) d'intégration d'un élément calorifère et/ou caloporteur.

15. Module de radiation selon la revendication 14,
**caractérisé en ce que** les moyens d'intégration d'un élément calorifère se présentent sous la forme de rails (6) entre lesquels peut être inséré un élément calorifère (13, 49).

16. Module de radiation selon la revendication 15,
**caractérisé en ce que** l'élément calorifère est un tissu chauffant électrique (13), une brique chauffante (49) ou une résistance autorégulante.

17. Module de radiation selon l'une des revendications 13 à 16, **caractérisé en ce que** les ailettes (32) présentent un profil ondulé afin d'augmenter la surface d'échange de chaleur.

18. Module de radiation selon l'une des revendications revendication 13 à 17, **caractérisé en ce qu'**il comporte un diffuseur (25).

19. Dispositif de régulation de la température d'une pièce ou d'un véhicule, **caractérisé en ce qu'**il comporte un capteur (16) de température, un moyen (17) de régulation de la température et au moins un module de radiation selon l'une des revendications 13 à 18, et **en ce qu'**il se présente sous une forme allongée et de faible largeur, afin d'être utilisé comme plinthe, comme profilé d'échange de température pour plafond, comme montant d'ouvrant ou comme colonne de radiation à 360°.

20. Dispositif de régulation de la température d'une pièce ou d'un véhicule, **caractérisé en ce qu'**il comporte un capteur (16) de température, un moyen (17) de régulation de la température et au moins quatre modules de radiation selon l'une des revendications 13 à 18 disposés verticalement en cercle afin de réaliser une colonne de radiation à 360°.

21. Séchoir pour serviette, linge ou matériau textiles, **caractérisé en ce qu'**il comporte un moyen (17) de régulation de la température et plusieurs modules de radiation selon l'une des revendications 13 à 18, solidarisés les uns aux autres et au moins un carénage (28) prolongeant le diffuseur (25).

22. Climatiseur pour habitation, pour véhicule ou pour aéronef, **caractérisé en ce qu'**il comporte un dispositif de régulation de la température selon la revendication 12 ou un module de radiation selon l'une des revendications 13 à 18, une pompe (39) permettant la circulation du fluide réfrigérant et un circuit de refroidissement permettant le refroidissement du fluide réfrigérant.

23. Climatiseur pour habitation pour véhicule ou pour aéronef, **caractérisé en ce qu'**il comporte au moins un module de radiation selon l'une des revendications 13 à 18, une pompe (39) permettant la circulation du fluide réfrigérant et un circuit de refroidissement permettant le refroidissement du fluide réfrigérant.

24. Dispositif de récupération de l'énergie solaire, **caractérisé en ce qu'**il comporte un support (45) supportant au moins un élément échangeur de température (20) selon la revendication 10, et une paroi (46) de captation de la chaleur.

25. Procédé de réalisation d'un module de radiation selon l'une des revendications 14 à 16, **caractérisé en ce qu'**on extrude un profilé constituant élément monobloc (24) échangeur de température comportant des ailettes de radiations et des moyens (6, 37b) d'intégration d'un élément calorifère, **en ce qu'**on découpe le profilé selon la longueur désirée afin de réaliser un élément monobloc (24) échangeur de température et **en ce qu'**on solidarise l'élément monobloc (24) avec un support (26).
